# EUROPÄISCHE PATENTSCHRIFT

(11) **EP 1 185 444 B1**
(45) Veröffentlichungstag und Bekanntmachung des Hinweises auf die Patenterteilung: **08.02.2006**
(21) Anmeldenummer: 01919201.2
(22) Anmeldetag: 16.03.2001
(51) Int. Cl.: B60S 1/34

(54) **WISCHARM FÜR EINEN SCHEIBENWISCHER**
WIPER ARM FOR A WINDSCREEN WIPER
BRAS DE MONTURE D'ESSUIE-GLACE

(30) Priorität: 25.03.2000 DE 10015065
(43) Veröffentlichungstag der Anmeldung: 13.03.2002
(73) Patentinhaber: ROBERT BOSCH GMBH, 70442 Stuttgart (DE)
(72) Erfinder: KRAUS, Achim, 77815 Buehl (DE); MAYER, Stephan, 76137 Karlsruhe (DE)
(86) Internationale Anmeldenummer: PCT/DE2001/001017
(87) Internationale Veröffentlichungsnummer: WO 2001/072564

(56) Entgegenhaltungen:
- DE-A- 3 709 994
- DE-A- 4 204 125
- PATENT ABSTRACTS OF JAPAN vol. 011, no. 006 (M-551), 8. Januar 1987 (1987-01-08) & JP 61 184148 A (NISSAN MOTOR CO LTD;OTHERS: 01), 16. August 1986 (1986-08-16)

## Beschreibung

### Stand der Technik

Die Erfindung geht von einem Wischarm für einen Scheibenwischer nach dem Oberbegriff des Anspruchs 1 aus.

Bekannte Scheibenwischer besitzen einen Wischarm, der aus einem Befestigungsteil und einem daran angelenkten Gelenkteil mit einer Wischstange besteht. An diese ist ein Wischblatt angelenkt, das aus einem Tragbügelsystem mit einem übergeordneten Mittelbügel und gelenkig verbundenen, untergeordneten Zwischenbügeln sowie Krallenbügeln und aus einer Wischleiste aufgebaut ist. Einfache Systeme besitzen nur einen Mittelbügel, an dem die Krallen vorgesehen sind.

Das Gelenkteil weist an seinem Ende, das dem Befestigungsteil zugewandt ist, eine Federkammer für eine Zugfeder auf. Die Federkammer ist zur Scheibe hin offen und hat zur Wischstange hin eine schlitzförmige Erweiterung mit einem Quersteg, an dem ein Haltebügel der Zugfeder eingehängt ist. Am anderen Ende der Zugfeder ist ein C-förmiger Bügel angeordnet, der an einer Einhängevorrichtung des Befestigungsteils eingehängt ist. Dabei kann sich das Gelenkteil über eine offene Nabe an einer bolzenförmigen Gelenkachse des Befestigungsteils abstützen. Aus der DE 37 09 994 A1 ist ein Wischarm bekannt, bei dem die offene Nabe am Befestigungsteil und die Gelenkachse am Gelenkteil vorgesehen ist. Das so gebildete Gelenk, auch Abklappgelenk genannt, und die Einhängevorrichtung der Zugfeder sind so zueinander angeordnet, dass die Zugfeder das Gelenkteil und die Wischstange in Richtung einer Fronrscheibe oder Heckscheibe eines Fahrzeugs zieht. Das Wischblatt liegt somit unter der Kraft der Zugfeder an der Fahrzeugscheibe an und wird durch diese in der Arbeitsstellung begrenzt.

Zum Reinigen oder zur Montage des Wischblatts ist das Gelenkteil des Scheibenwischers von der Fahrzeugscheibe abklappbar. Dazu wird das Gelenkteil so weit um das Abklappgelenk geschwenkt, dass die resultierende Kraftlinie der Zugfeder die Gelenkachse nach außen überschreitet und die Zugfeder das Gelenkteil gegen einen Anschlag am Befestigungsteil in eine Abklappstellung zieht. Um in der Abklappstellung eine sichere Verrastung zu erreichen, die eine leichte Montage ermöglicht, ohne dass das Gelenkteil mit der Wischstange gegen die Fahrzeugscheibe zurück schlägt, muss das Gelenkteil ziemlich weit um die Gelenkachse gedreht und die Wischstange weit von der Fahrzeugscheibe entfernt werden. Schlägt die Wischstange vor Beendigung der Montage des Wischblatts ungewollt aus der Abklappstellung gegen die Fahrzeugscheibe, kann diese oder der Wischarm beschädigt werden.

Im vormontierten Zustand, in der Anlieferstellung, wird das Abklappgelenk durch eine Vorspannung der Zugfeder zusammengehalten. Zu diesem Zweck sind am Befestigungsteil und am Gelenkteil Anlageflächen vorgesehen, die das Abklappgelenk auf der Seite abstützen, die der Nabe in Bezug auf die Wirkungslinie der Zugfeder abgewandt ist. Eine statisch stabile Lage dieser Teile ist gegeben, wenn die Kraftlinie der Zugfeder zwischen den Abstützpunkten an der Gelenkachse und an den Anlageflächen verläuft. Durch geringe Krafteinwirkung auf den vormontierten Wischarm, z.B. durch Erschütterungen während des Transports oder unvorsichtige Handhabung, können die Anlageflächen sich gegenseitig verschieben und aneinander abgleiten, so dass die Gelenkachse aus der Nabe heraus gleitet und das Abklappgelenk in seine einzelnen Bestandteile auseinander fällt. Dadurch werden zusätzliche Montagearbeiten notwendig und es besteht die Gefahr, dass Teile verloren gehen.

### Vorteile der Erfindung

Nach der Erfindung sind die Anlageflächen so angeordnet und/oder gestaltet, dass sich bei einem kleineren Gelenkwinkel ϕ über die Transportstellung hinaus die Gelenkachse von ihrer Anlage an der Nabe in Richtung auf das offene Ende bewegt und sich dabei die Vorspannung der Zugfeder erhöht. Zweckmäßigerweise ist jeweils eine Anlagefläche am Befestigungsteil oder am Gelenkteil konkav, während die jeweils andere Anlagefläche am anderen Teil entsprechend konvex gestaltet ist. Dabei besitzt die konkave Anlagefläche in Bezug auf die Kraftlinie der Zugfeder nach außen hin eine nockenförmige Erhebung. Die so ausgebildeten Anlageflächen sichern eine definierte Lage der oben genannten Teile im vormontierten Zustand des Wischarms, indem sie eine Art Federraste bilden. Wirken durch Erschütterungen oder einen Schlag auf die Teile Querkräfte oder ein Drehmoment, das die Tendenz hat, den Gelenkwinkel ϕ über die Transpcrrstellung hinaus zu verkleinern, gleitet die konvexe Anlagefläche geführt durch den Gelenkbolzen in der offenen Nabe an der nockenförmigen Erhebung entlang, wodurch sich der Abstand zwischen den Einhängevorrichtungen der Zugfeder vergrößert und sich als Folge die Vorspannung der Zugfeder erhöht. Nach der Belastung werden die Teile unter Abbau eines Teils der Vorspannung wieder in ihre Ausgangslage zurückgeführt, so dass sie sich bei wiederholten Erschütterungen oder Stößen nicht fortschreitend lösen können, indem sie Stück für Stück aufeinander abgleiten.

Zur leichteren Montage ist an der Erhebung nach außen eine Anlauframpe angeformt, über die die konvexe Anlagefläche leicht über die nockenförmige Erhebung in die konkave Anlagefläche geführt werden kann. Grundsätzlich können die Anlageflächen an einer beliebigen Stelle des Befestigungsteils bzw. des Gelenkteils vorgesehen werden. Eine besonders einfache Lösung ergibt sich, wenn die Kontur der Einhängevorrichtung der Zugfeder am Befestigungsteil zum Gelenkteil hin walzenförmig ausgebildet ist und als Anlagefläche dient.

Nach einer Ausgestaltung der Erfindung gelangt das Gelenkteil beim Bewegen in eine Abklappstellung mit einem Gelenkwinkel ϕ größer als 180° an einem Anschlag zur Anlage und stützt sich daran ab. Ferner schließt sich an die konkave Anlagefläche an der anderen Seite der Nabe zum offenen Ende hin ein Rastnokken mit einer Rastvertiefung an, in die in der Abklappstellung die konvexe Anlagefläche einrastet. Der Rastnocken ist zum Anschlag so angeordnet, dass die Gelenkachse in der Abklapppstellung um einen Verschiebeweg zum offenen Ende der Nabe hin verlagert ist und die Kraftlinie der Zugfeder zwischen dem Anschlag und der Rastvertiefung verläuft. Damit stützt sich das Gelenkteil in der Abklappstellung an dem Anschlag und dem Rastnocken ab, deren Lage frei wählbar ist, so dass ein beliebiger Abklappwinkel erzielt und auf die Gegebenheiten des Fahrzeugs abgestimmt werden kann.

Auf den Rastnocken kann verzichtet werden, wenn gemäß einer weiteren Ausgestaltung der Erfindung der Anschlag zum Begrenzen des Abklappwinkels als Federraste ausgebildet ist, wobei die Zugfeder als Rastfeder dient. Zweckmäßigerweise besitzt die Federraste ein konvexes Rastelement, das am Befestigungsteil oder am Gelenkteil angeordnet ist und in der Abklappstellung des Gelenkteils in eine Rastvertiefung an dem jeweils anderen Teil einrastet, wobei sich die Gelenkachse beim Einrasten ein wenig von ihrer Anlage an der offenen Nabe löst und die Vorspannung der Zugfeder zunimmt. Das Gelenkteil mit der Wischstange wird somit sicher in einer Abklappstellung mit einem kleinen Abklappwinkel gehalten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Längsschnitt durch einen erfindungsgemäßen Wischarm im vormontierten Zustand,
- Fig. 2: einen vergrößerten Ausschnitt II nach Fig. 1 zu Beginn der Montage,
- Fig. 3: einen vergrößerten Ausschnitt nach Fig. 1 bei fortgeschrittener Montage,
- Fig. 4: einen vergrößerten Ausschnitt II nach Fig. 1,
- Fig. 5: eine Variante zu Fig. 4,
- Fig. 6: eine Variante zu Fig. 4 und
- Fig. 7: die Ausführung nach Fig. 6 in einer Abklappstellung,
- Fig. 8: den Bereich II in Fig. 1 in einer Draufsicht,
- Fig. 9: einen Schnitt entsprechend der Linie IX-IX in Fig. 8,
- Fig. 10: einen Schnitt entsprechend der Linie X-X in Fig. 8 in einer Abklappstellung des Gelenkteils,
- Fig. 11: einen Schnitt entsprechend der Linie X-X in Fig. 8 in einer Transportstellung des Gelenkteils,
- Fig. 12: eine Variante zu Fig. 10 und
- Fig. 13: eine Variante zu Fig. 11.

### Beschreibung der Ausführungsbeispiele

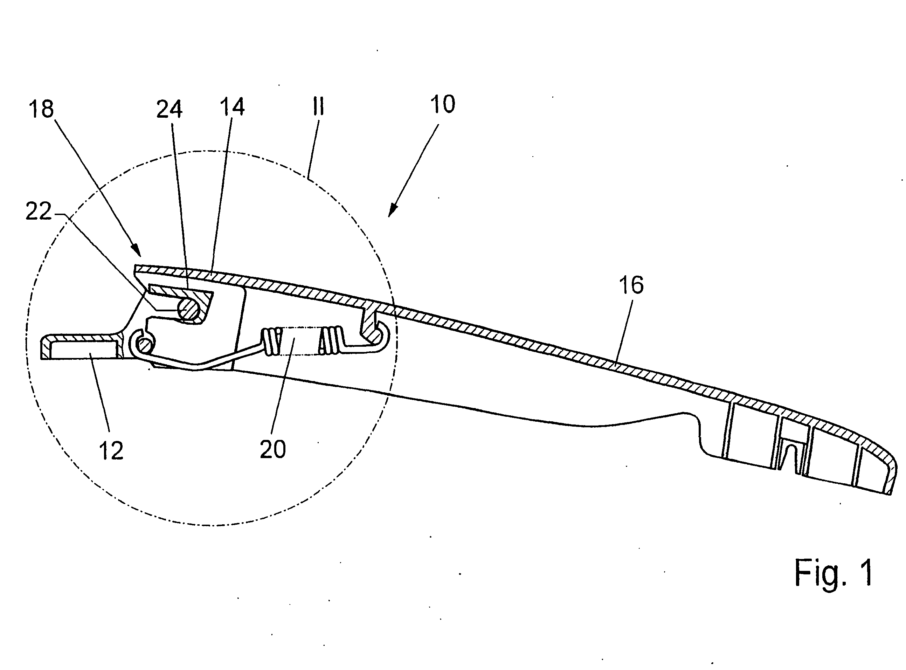

Ein Wischarm 10 besteht im Wesentlichen aus einem Befestigungsteil 12 und einem Gelenkteil 14 mit einer angeformten Wischstange 16 (Fig. 1). Am freien Ende der Wischstange 16 kann ein nicht näher dargestelltes Wischblatt angelenkt werden. Das Befestigungsteil 12 ist mit dem Gelenkteil 14 durch ein Abklappgelenk 18 verbunden. Beide Teile sind in der gezeigten vormontierten Transportstellung durch eine Zugfeder 20 gegeneinander verspannt.

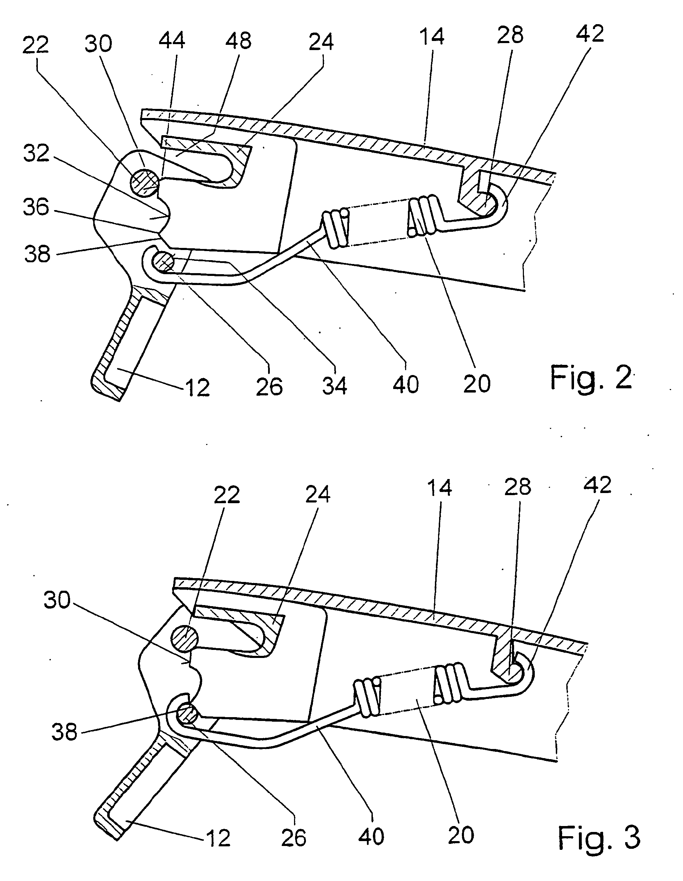

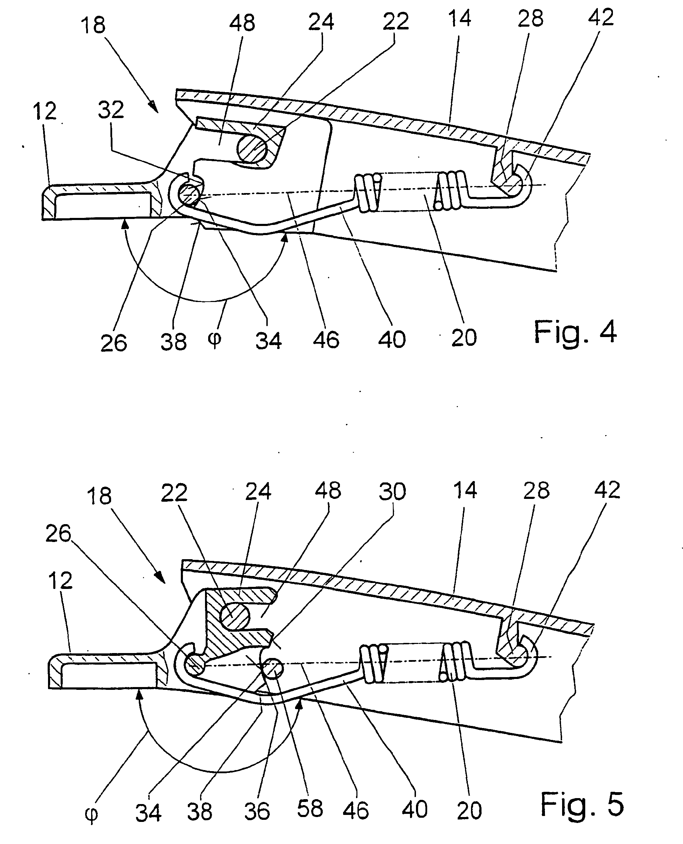

Den äußeren Teil des Abklappgelenks 18 bildet eine fest mit dem Gelenkteil 14 verbundene, zum Befestigungsteil 12 hin offene Nabe 24, in der eine fest mit dem Befestigungsteil 12 verbundene, bolzenförmige Gelenkachse 22 gelagert ist (Fig. 2). Jedoch ist auch eine umgekehrte Anordnung möglich, bei der die Nabe 24 mit dem Befestigungsteil 12 und die Gelenkachse 22 mit dem Gelenkteil 14 fest verbunden sind (Fig. 5, 12, 13). An der zur Zugfeder 20 weisenden Seite der Nabe 24 sind Flächen 30 angeformt, welche durch einen Schlitz getrennt sind, in dem ein C-förmiger Bügel 40 der Zugfeder 20 während der Bewegung des Gelenkteils 14 gleiten kann. Die beiden Flächen 30 verlaufen parallel zur Längsachse der Nabe 24 und bilden mit einem zum Befestigungsteil 12 gerichteten offenen Ende 48 der Nabe 24 einen stumpfen, vorzugsweise annähernd rechten Winkel. Sie besitzen in einem Abstand vom offenen Ende 4B jeweils eine konkave Anlagefläche 32.

Eine fest mit dem Befestigungsteil 12 verbundene Einhängevorrichtung 26 für die Zugfeder 20 besitzt an der dem Gelenkteil 14 zugewandten Seite eine walzenförmige Kontur, die zu beiden Seiten des C-förmigen Bügels 40 eine konvexe Anlagefläche 34 bildet, welche im vormontierten Zustand an den konkaven Anlageflächen 32 des Gelenkteils 14 anliegt (Fig. 4). Am Gelenkteil 14 ist die Zugfeder 20, welche die Teile 22, 24 des Abklappgelenks 18 verspannt, in einer Einhängevorrichtung 28 eingehängt. Dabei verläuft die Kraftlinie 46 der Zugfeder 20 zwischen den beiden Abstützpunkten, die durch die Gelenkachse 22 in der Nabe 24 und die Anlageflächen 32 und 34 gebildet werden. Bei der Ausführung nach Fig. 5 ist im Gelenkteil 14 ein Stift 58 vorgesehen, an dem die walzenförmige Anlagefläche 34 angeordnet ist.

Die konkave Anlagefläche 32 weist an der in Bezug auf die Kraftlinie 46 der Zugfeder 20 nach außen liegenden Seite eine nockenförmige Erhebung 36 auf. Die Erhebung 36 erstreckt sich in Richtung der Kraftlinie 46 und besitzt einen großeren Abstand zur Einhängevorrichtung 23 als die konkave Anlagefläche 32. Sie wirkt somit als Federraste, denn nur durch Vergrößerung der Vorspannung der Zugfeder 20 kann die walsenförmige Anlagefläche 32 die Erhebung 36 überwinden und die Rastposition verlassen, so dass die Gelenkachse 22 aus der offenen Nabe 24 heraus gedreht werden kann.

Vor der Montage des Wischarms 10 wird der Bügel 40 der Zugfeder 20 in die Einhängevorrichtung 26 am Befestigungsteil 12 und der Bügel 42 der Zugfeder 20 in die Einhängevorrichtung 28 am Gelenkteil 14 eingehängt (Fig.2). Die Gelenkachse 22 des Abklappgelenks 18 liegt an den Flächen 30 an. Wird das Gelenkteil 14 entgegen dem Uhrzeigersinn bewegt, gelangt die Gelenkachse 22 unter Vorspannung der Zugfeder 20 über eine Fase 44 in die offene Nabe 24 und die konkave Anlagefläche 32 stützt sich nun an einer an der Erhebung 36 angeformten Anlauframpe 38 ab (Fig. 3). Wird das Gelenkteil 14 anschließend in gleicher Richtung weiter bewegt, gleitet die konkave Anlagefläche 32 auf der Anlauframpe 38 bis an die Erhebung 36 heran und rastet in die konkave Anlagefläche 32 ein, während die Gelenkachse 22 am geschlossenen Ende der Nabe 24 zur Anlage kommt. Zur Demontage muss die Vorspannung der Zugfeder 20 erhöht werden, um die Erhebung 36 zu überwinden. Somit wird verhindert, dass das Abklappgelenk 18 während des Transports unbeabsichtigt auseinander fällt.

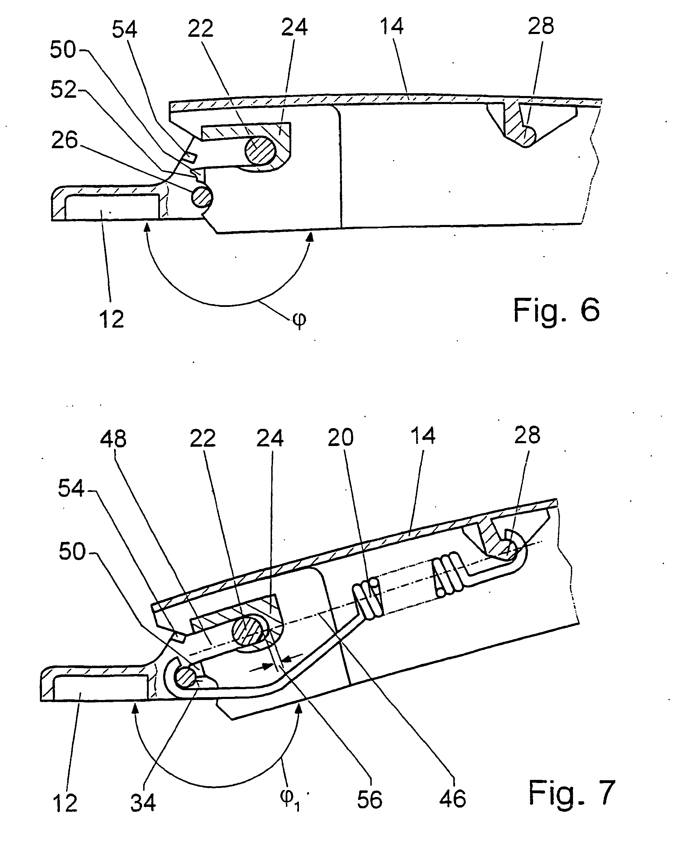

Bei der Ausführung nach Fig. 6 und 7 besitzt das Befestigungsteil 12 einen Anschlag 54, an dem das Gelenkteil 14 in einer Abklappstellung (Fig. 7) zur Anlage gelangt. Wird der Winkel ϕ zwischen dem Befestigungsteil 12 und dem Gelenkteil 14 ein klein wenig vergrößert, verlagert sich die Gelenkachse 22 um einen Verschiebeweg 56 zum offenen Ende 48 der Nabe 24 und die konvexe Anlagefläche 34 rastet in die Rasiveruiefung 52 des Rastnockens 50 ein. Dadurch kann eine wesentlich flachere Abklappstellung mit einem kleineren Abklappwinkel ϕ₁ erreicht werden, als wenn die Kraftlinie 46 der Zugfeder 20 die Gelenkachse 22 nach außen überschreiten müsste.

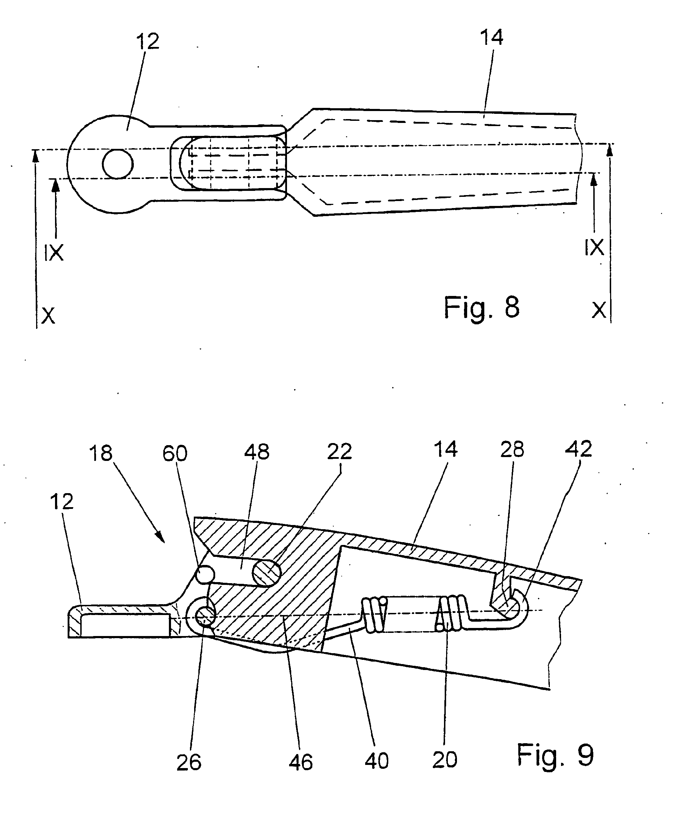

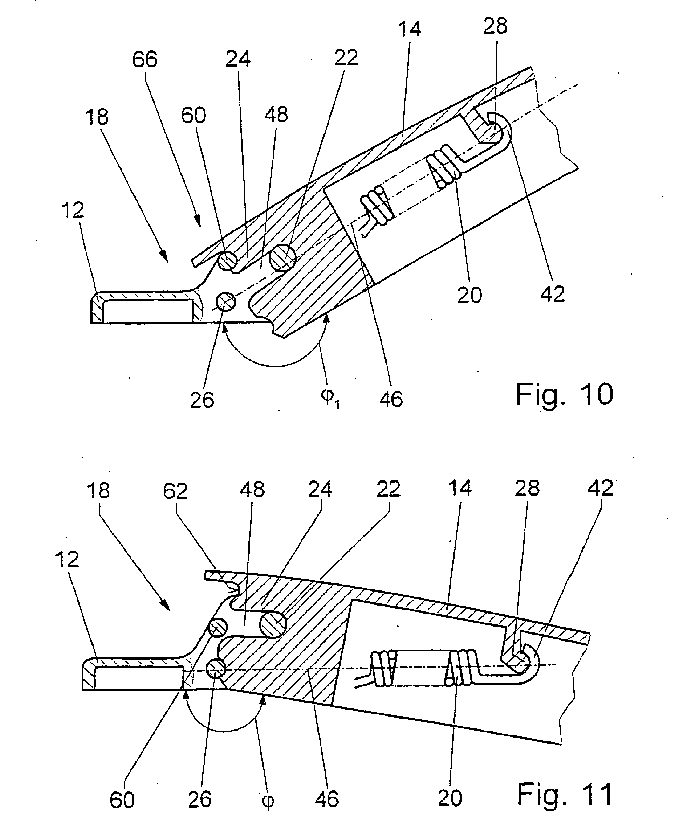

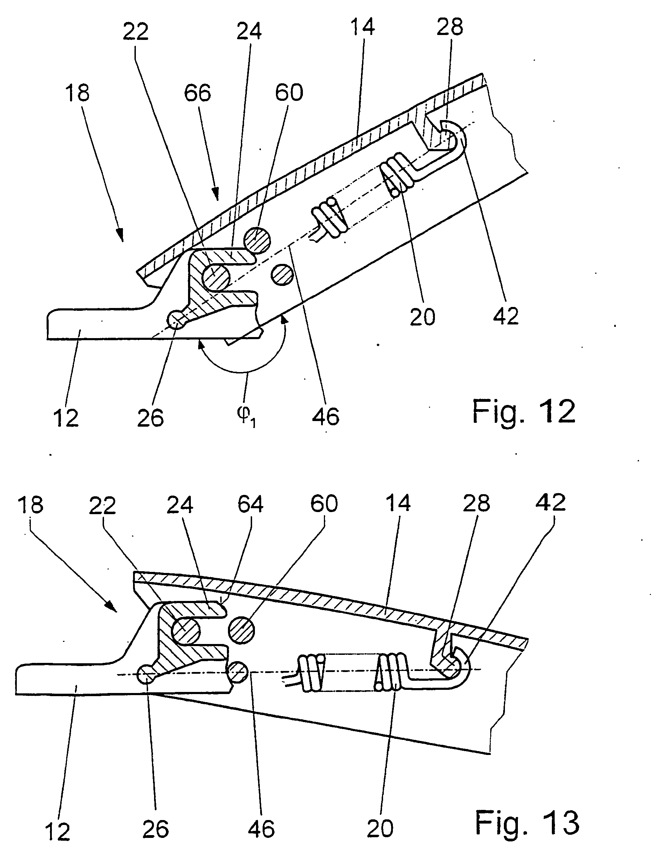

Die Draufsicht nach Fig. 8 gibt die Schnittebenen IX-IX und X-X für die Fig. 9 bis Fig. 13 an. Die in der Fig. 9 bis Fig. 11 dargestellten Schnitte zeigen ein Ausführungsbeispiel, während die Fig. 12 und 13 Schnitte zeigen, die eine Variante betreffen. Bei beiden Ausführungen ist ein Anschlag 66 zum Begrenzen des Abklappwinkels ϕ₁ als Federraste ausgebildet, indem ein Rastelement 60 in der Abklappstellung (Fig. 10 bzw. Fig. 12) in eine Rastvertiefung 62 bzw. 64 einrastet. Die Zugfeder 20 wirkt dabei als Rastfeder, indem ihre Vorspannung beim Einrasten ein Maximum überschreitet. Somit wird das Gelenkteil 14 sicher in der Abklappstellung gehalten. Die Ausführung nach Fig. 9 bis Fig. 11 unterscheidet sich im Wesentlichen von der Varianten nach Fig. 12 und Fig. 13 durch die Anordnung der offenen Nabe 24, und zwar ist diese zum einen am Gelenkteil 14 und zum anderen am Befestigungsteil 12 angeordnet, während die Gelenkachse 22 am jeweils anderen Teil 12 bzw. 14 vorgesehen ist.

### Bezugszeichen

- 10: Wischarm
- 12: Befestigungsteil
- 14: Gelenkteil
- 16: Mischstange
- 18: Abklappgelenk
- 20: Zugfeder
- 22: Gelenkachse
- 24: Nabe
- 26: Einhängevorrichtung
- 28: Einhängevorrichtung
- 30: Fläche
- 32: Anlagefläche
- 34: Anlagefläche
- 36: Erhebung
- 38: Anlauframpe
- 40: Bügel
- 42: Bügel
- 44: Fase
- 96: Kraftlinie
- 48: offenes Ende
- 50: Rastnocken
- 52: Rastvertiefung
- 54: Anschlag
- 56: verschiebeweg
- 58: Stift
- 60: Rastelement
- 62: Rastvertiefung
- 64: Rastvertiefung
- 66: Anschlag

- ϕ: Gelenkwinkel
- ϕ₁: Abklappwinkel

## Patentansprüche

1. Wischarm (10) für einen Scheibenwischer mit einem Befestigungsteil (12) und einem Gelenkteil (14), die über ein Abklappgelenk (18) miteinander verbunden sind, das eine mit einem Teil (14 bzw. 12) fest verbundene, zum anderen Teil (12 bzw. 14) hin offene Nabe (24) und eine mit dem anderen Teil (12 bzw. 14) fest verbundene Gelenkachse (22) hat, wobei eine Zugfeder (20) an ihren Enden jeweils in einer Einhängevorrichtung (26, 28) des Gelenkteils (14) und des Befestigungsteils (12) eingehängt ist und die Nabe (24) und die Gelenkachse (22) im montierten Zustand gegeneinander verspannt und das Abklappaelenk (18) in einem vormontierten Zustand des Wischarms (10) in einer definierten Transportstellung an einer Anlage hält, die in Bezug auf die Kraftlinie (46) der Zugfeder (20) auf der der Nabe (24) abgewandten Seite der oben genannten Teile angeordnet ist und durch jeweils mindestens eine Anlagefläche (32, 34) am Gelenkteil (14) und am Befestigungsteil (12) gebildet wird, **dadurch gekennzeichnet, dass** die Anlageflächen (32, 34) so angeordnet und/oder gestaltet sind, dass sich bei einem kleineren Gelenkwinkel (ϕ) über die Transportstellung hinaus die Gelenkachse (22) von ihrer Anlage an der Nabe (24) in Richtung auf das offene Ende (48) bewegt und sich dabei die Vorspannung der Zugfeder (20) erhöht.

2. Wischarm (10) nach Anspruch 1, **dadurch gekennzeichnet, dass** die eine Anlagefläche (32) konkav und die andere Anlagefläche (34) entsprechend konvex gestaltet ist, wobei die konkave Anlagefläche (32) an der in Bezug auf die Kraftlinie der Zugfeder (20) nach außen liegenden Seite eine Erhebung (36) aufweist, gegen die die Anlagefläche (32) gedrückt wird, wenn sich die Gelenkachse (22) zum offenen Ende (43) der Nabe (24) hin bewegt.

3. Wischarm (10) nach Anspruch 2, **dadurch** gekennteichnet, dass an der Erhebung (36) nach außen eine Anlauframpe (38) angeformt ist.

4. Wischarm (10) nach einem der vorhergehenden Ansprüche, **dadurch gekennzeichnet, dass** die Kontur der Einhängevorrichtung (26) der Zugfeder (20) am Befestigungsteil (12) zum Gelenkteil (14) hin walzenförmig ausgebildet ist und als Anlagefläche (34) dient.

5. Wischarm (10) nach einem der vorhergehenden Ansprüche, **dadurch gekennzeichnet, dass** das Gelenkteil (14) beim Bewegen in eine Abklappstellung mit einem Gelenkwinkel (ϕ) größer als 180° an einem Anschlag (54) zur Anlage gelangt und si=h daran abstützt und dass sich an die konkave Anlagefläche (32) zum offenen Ende (48) der Nabe (24) hin ein Rastnocken (50) mit einer Rastvertiefung (52) anschließt, in die in der Abklappstellung die konvexe Anlagefläche (34) einrastet, wobei der Rastnocken (50) relativ zum Anschlag (54) so angeordnet ist, dass die Gelenkachse (22) um einen Verschiebeweg (56) zum offenen Ende (48) der Nabe (24) hin verlagert ist und die Kraftlinie (46) der Zugfeder (20) zwischen dem Anschlag (54) und der Anlage der Anlagefläche (34) in der Rastvertiefung (52) verläuft.

6. Wischarm (10) nach einem der Ansprüche 1 bis 4, **dadurch gekennzeichnet, dass** das Gelenkteil (14) beim Bewegen in eine Abklappstellung mit einem Gelenkwinkel (ϕ₁) größer als 180° an einem Anschlag (66) zur Anlage gelangt, der als Federraste ausgebildet ist, wobei die Zugfeder (20) als Rastfeder dient.

7. Wischarm (10) nach Anspruch 6, **dadurch gekennzeichnet, dass** die Federraste (66) ein konvexes Rastelement (60) besitzt, das am Befestigungsteil (12) oder am Gelenkteil (14) angeordnet ist und in der Abklappstellung des Gelenkteils (14) in eine Rastvertiefung (62, 64) an dem jeweils anderen Teil (12, 14) einrastet, wobei sich die Gelenkachse (22) beim Einrasten ein wenig von ihrer Anlage an der offenen Nabe (24) löst und die Vorspannung der Zugfeder (20) zunimmt.

## Claims

1. Wiper arm (10) for a windscreen wiper, with a fastening part (12) and an articulated part (14) which are connected to each other via a fold-down joint (18) which has a hub (24) which is connected fixedly to one part (14 or 12) and is open towards the other part (12 or 14) and an articulated spindle (22) connected fixedly to the other part (12 or 14), with a tension spring (20) being attached at its ends in a respective attachment device (26, 28) of the articulated part (14) and of the fastening part (12) and bracing the hub (24) and the articulated spindle (22) with respect to each other in the fitted state and holding the fold-down joint (18), in a preassembled state of the wiper arm (10), in a defined transportation position on a bearing which is arranged, with respect to the line of force (46) of the tension spring (20), on that side of the abovementioned parts which faces away from the hub (24), and is formed by in each case at least one bearing surface (32, 34) on the articulated part (14) and on the fastening part (12), **characterized in that** the bearing surfaces (32, 34) are arranged and/or designed in such a manner that, at a relatively small angle of articulation (ϕ) beyond the transportation position, the articulated spindle (22) moves away from its bearing against the hub (24) in the direction of the open end (48) and the prestressing of the tension spring (20) increases in the process.

2. Wiper arm (10) according to Claim 1, **characterized in that** the one bearing surface (32) is of concave design and the other bearing surface (34) is of correspondingly convex design, the concave bearing surface (32) having on the side situated to the outside with regard to the line of force of the tension spring (20) an elevation (36) against which the bearing surface (32) is pressed when the articulated spindle (22) moves towards the open end (48) of the hub (24).

3. Wiper arm (10) according to Claim 2, **characterized in that** a run-on ramp (38) is integrally formed on the elevation (36) to the outside.

4. Wiper arm (10) according to one of the preceding claims, **characterized in that** the contour of the attachment device (26) of the tension spring (20) on the fastening part (12) is of cylindrical design towards the articulated part (14) and serves as a bearing surface (34).

5. Wiper arm (10) according to one of the preceding claims, **characterized in that** the articulated part (14), when it moves into a folded-down position with an angle of articulation (ϕ) of greater than 180°, comes to bear against a stop (54) and is supported thereon, and **in that** the concave bearing surface (32) is adjoined towards the open end (48) of the hub (24) by a latching cam (50) with a latching depression (52) into which the convex bearing surface (34) latches in the folded-down position, with the latching cam (50) being arranged relative to the stop (54) in such a manner that the articulated spindle (22) is shifted by a displacement distance (56) towards the open end (48) of the hub (24) and the line of force (46) of the tension spring (20) runs between the stop (54) and the bearing of the bearing surface (34) in the latching depression (52).

6. Wiper arm (10) according to one of Claims 1 to 4, **characterized in that** the articulated part (14), when it moves into a folded-down position with an angle of articulation (ϕ₁) of greater than 180°, comes to bear against a stop (66) which is designed as a spring latch, with the tension spring (20) serving as a latching spring.

7. Wiper arm (10) according to Claim 6, **characterized in that** the spring latch (66) has a convex latching element (60) which is arranged on the fastening part (12) or on the articulated part (14) and, in the folded-down position of the articulated part (14), latches into a latching depression (62, 64) on the respectively other part (12, 14), with the articulated spindle (22), when latched in place, being released a little from its bearing against the open hub (24) and the prestressing of the tension spring (20) increasing.

## Revendications

1. Bras d'essuie-glace (10) comportant une pièce de fixation (12) et une pièce d'articulation (14) reliées l'une à l'autre par une articulation repliable (18) qui comporte un moyeu (24) solidaire d'une pièce (14 ou 12) et ouvert vers l'autre pièce (12 ou 14) ainsi qu'un axe d'articulation (22) solidaire de l'autre pièce (14 ou 12), pour lequel un ressort de traction (20) est suspendu à chacune de ses extrémités dans un dispositif de suspension (26, 28) de la pièce d'articulation (14) et de la pièce de fixation (12) et contraint le moyeu (24) et l'axe d'articulation (22) l'un par rapport à l'autre à l'état monté, et, quand le bras d'essuie-glace (10) est à l'état prémonté, il maintient l'articulation repliable (18) dans une certaine position de transport sur une installation qui, par rapport à la ligne de force (46) du ressort de traction (20), se trouve sur le côté - détourné du moyeu (24) - des susdites pièces et est formée par au moins une surface de contact (32, 34) sur la pièce d'articulation (14) et sur la pièce de fixation (12),
**caractérisé en ce que**
les surfaces de contact (32, 34) sont disposées et/ou sont structurées de telle manière que lorsque l'angle d'articulation (ϕ) est assez petit l'axe d'articulation (22) se déplace au-delà de la position de transport depuis sa position contre le moyeu (24) vers l'extrémité (48) ouverte et dans ce cas la précontrainte du ressort de traction (20) augmente.

2. Bras d'essuie-glace (10) selon la revendication 1,
**caractérisé en ce qu'**
une des surfaces de contact (32) est concave et l'autre surface de contact (34) est convexe en lui correspondant, et sur le côté orienté vers l'extérieur par rapport à la ligne de force du ressort de traction (20) la surface de contact (32) concave est munie d'un bossage (36) contre lequel la surface de contact (32) est poussée quand l'axe d'articulation (32) se déplace vers l'extrémité (48) ouverte du moyeu (24).

3. Bras d'essuie-glace (10) selon la revendication 2,
**caractérisé en ce qu'**
une rampe d'impulsion (38) est façonnée vers l'extérieur sur le bossage (36).

4. Bras d'essuie-glace (10) selon l'une des revendications précédentes,
**caractérisé en ce que**
le contour du dispositif de suspension (26) du ressort de traction (20) est cylindrique sur la pièce de fixation (12) vers la pièce d'articulation (14) et sert de surface de contact (34).

5. Bras d'essuie-glace (10) selon l'une des revendications précédentes,
**caractérisé en ce que**
quand elle passe en position repliée à un angle d'articulation (ϕ) supérieur à 180°, la pièce d'articulation (14) entre en contact avec une butée (54) et s'y appuie,
vers l'extrémité (48) ouverte du moyeu (24), il y a ensuite sur la surface de contact (32) concave un nez d'accrochage (50) muni d'un creux d'accrochage (52) dans lequel s'accroche la surface de contact (34) convexe en position repliée, le nez d'accrochage (50) étant disposé par rapport à la butée (54) de telle manière que l'axe d'articulation (22) est décalé d'une course (56) vers l'extrémité (48) ouverte du moyeu (24), et la ligne de force (46) du ressort de traction (20) s'étend entre la butée (54) et le contact de la surface de contact (34) dans le creux d'accrochage (52).

6. Bras d'essuie-glace (10) selon l'une des revendications 1 à 4,
**caractérisé en ce que**
quand elle passe en position repliée à un angle d'articulation (ϕ1) supérieur à 180°, la pièce d'articulation (14) entre en contact avec une butée (66) conçue comme accrochage élastique, le ressort de traction (20) servant de ressort d'accrochage.

7. Bras d'essuie-glace (10) selon la revendication 6,
**caractérisé en ce que**
l'accrochage élastique (66) comporte un élément d'accrochage (60) convexe placé sur la pièce de fixation (12) ou sur la pièce d'articulation (14) et, quand la pièce d'articulation (14) est en position repliée, s'accroche dans un creux d'accrochage (62, 64) sur l'autre des pièces (12, 14), lors de l'accrochage l'axe d'articulation (22) relâche légèrement son contact contre le moyeu (24) ouvert et la précontrainte du ressort de traction (20) augmente.
